Europäisches Patentamt

European Patent Office

Office européen des brevets

(11) Publication number: **0 172 644**
A2

# (12) EUROPEAN PATENT APPLICATION

(21) Application number: 85304957.5

(22) Date of filing: 11.07.85

(51) Int. Cl.⁴: **C 08 L 61/06**
C 08 J 9/14, B 32 B 3/12
//E04C2/36

(30) Priority: 12.07.84 AU 5978/84

(43) Date of publication of application:
26.02.86 Bulletin 86/9

(84) Designated Contracting States:
AT BE CH DE FR GB IT LI LU NL SE

(71) Applicant: INSULBOARD PTY. LIMITED
P.O. Box 156
Glen Waverley Victoria 3150(AU)

(72) Inventor: Brown, Barry Thomas
1 Rhodes Drive
Glen Waverley Victoria, 3150(AU)

(74) Representative: Wilkinson, Stephen John et al,
c/o Stevens, Hewlett & Perkins 5 Quality Court Chancery
Lane
London WC2A 1HZ(GB)

(54) A foam composition and use thereof.

(57) A method of producing a phenolic foam composition
comprises reacting

(A) an aqueous solution of a reactive phenolic resin
having 65-85% wt. solid solution

(B) a foaming agent and

(C) a reactive acid hardener wherein the ratio of component (A) to component (B) is from
4.5:1 to 9.3:1 and the ratio of component (A) to component
(C) is from 6.5:1 to 7.5:1.

The phenolic foam composition which has excellent fire
resistance and very low thermal conductivity is useful in the
manufacture of wall or ceiling boards for use in the building
industry.

A FOAM COMPOSITION AND USE THEREOF

Field of the Invention

The invention relates to compositions and methods which have particular utility in producing material for use in the building industry. Whilst the following description refers to the use of the composition as a lining material, it is not to be assumed that the invention is so limited.

Plaster has been the basic lining material for the insides of buildings for hundreds of years. Various modifications to the plaster composition have been developed over the years and at the present time this remains the major material used for lining the inside of buildings. The modern lining plaster is faced on both sides by thin paper. In doing this the sheet is ready for immediate painting. Further, the paper contributes to the allowance of use of lower density plaster than hitherto known. This faced liner is known by names including VICTORBOARD, GYPSUM BOARD and GYPROCK.

Notwithstanding these improvements in plaster, such still exhibits a fairly high thermal conductivity as well as low impact strength. The high thermal conductivity characteristic of the plaster permits heat dissipation from rooms in the cold winter months and allows during summer a heat flow into the room. It will be obvious that such an energy transfer is unwanted, wasteful and costly to counteract.

In climates such as in Australia which typically span a temperature range between $0^{\circ}C$ to $40^{\circ}C$, a trend has been emerging toward installing insulation in buildings. At present there are two generally known methods of insulation. In the already constructed house the easiest way of introducing insulation is to blow in or place the insulation material in the ceiling. The second method of installation of the insulation is insertion between the walls and lining during construction. This incurs the proprietor in considerable expense additional to normal building costs.

As for the low strength of normal plaster or plasterboard, whilst this material is sufficiently tough to withstand fairly low impacts, it is suspect to cracking upon high or even medium localized impact. Therefore it does occasionally prove necessary to repair the liner which of course adds to the general costs of maintenance.

Plaster is further characterized by a high weight per unit area and this characteristic causes further expense due to the additional time necessary for installation of the lining and consequent labour costs. Notwithstanding these disadvantages inherent in the composition of plaster, to date, there has been no economically viable substitute developed and as a result of this the use of such type of lining predominates in the building industry.

Summary of the Invention

Accordingly it is proposed to use a phenol formaldehyde foam generically known as a phenolic foam in place of the presently used materials. More particularly the present invention relates to improvements in the manufacture and composition of phenolic foams.

The phenolic foam developed in line with information supplied hereinafter has excellent fire properties. When tested in accordance with the Australian Standard 1530 Part 3, it has found to have a 4 zero fire rating, that is, zero ignition, zero spread of flame, zero heat evolved and zero smoke emmision. This has been an unexpected characteristic of the present phenolic foam as available phenolic foams do not generally exhibit excellent fire resistance. Thus the fire rating which has been achieved is quite remarkable.

A second feature of the phenolic foam according to the present invention is its very low thermal conductivity. Consequently the foam helps to conserve energy. The phenolic foam will therefor also act as an insulator and thereby repel the flow of heat into a building in the summer and likewise retard the amount of heat lost from the inside of a building during the winter months.

A third feature of the present invention is its method of manufacture which achieves a substantially regular sized cellular structure throughout the entire product though the shape of the cells may vary. This is particularly important as large voids in the foam can be large sources of heat loss or gain.

A fourth feature of the present invention is the phenolic foams resistance to punking which phenomenon is lacking in prior or phenolic foams.

As previously mentioned in one application of the invention the phenolic foam may be used as a wall element. More particularly an external facing wall exhibiting all of the above characteristics will be a great advantage to the building industry.

The present phenolic foam may be economically produced and is a viable superior alternative to most other more commonly used types of plastic foams used within the building industry.

Whilst the present phenolic foam has been found to be an alternative to conventional plaster lining material that is more commonly used within a building structure, it is preferred to produce a composite panel consisting of an internal facing, being a heavy grade cardboard type or very thin plaster finish laminated to a central core of the present foam.

Typically the foam has a density that can be varied from between 8 to 100 kg. per cu. meter. However, when using a density foam core in the lower range it is desirable to incorporate in that a low cost filler. The central core of foam can be of variable thickness depending upon its intended application. Typically it can range from 20 mm to 100 mm thick. Thus a representative wall panel would consist of a 10 mm gypsum board plaster laminated to a 70 mm thick foam laminate with an external facing which can be any type of the standard building materials such as cement sheet, aluminium or colour bond steel.

Lamination of facings to the foam core may be achieved by any suitable means. Conventionally they may be adhered to each other with a surface adhesive such as a water based adhesive or neoprene based, fire rated contact adhesive. In this respect, it is preferred to pass the adhering laminate through pressure rollers to assist formation of the bond. Alternatively the use of an adhesive may be minimized or eliminated by foaming or curing the foam in intimate contact with the facings. This can be achieved in devices such as a platen press. Such laminates display excellent bonding qualities between respective layers. In yet another alternative the facing may be mechanically affixed to the foam by any suitable means such as pinning.

Having regard to the stated characteristics of the phenolic foam of the invention, it has unlimited utility in all aspects of the building industry. It may be used as an internal ceiling, a lining material, an internal non-load bearing composite wall, an external non-load bearing composite wall or as a load bearing composite wall.

Clearly depending on the intended use, it is possible to easily modify characteristics such as density. Illustrative of this is the following description of preferred phenolic compositions and methods of manufacturing same.

Typically the phenolic foam is fabricated from three components. Component A is a modified phenol formaldehyde resin. The resin may contain surfactants such as silicon surfactants to assist in regular cell formation. Typically the surfactant may be a silicon glycol copolymer. Preferably this resin is a 65% to 85% solid solution of reactive phenol formaldehyde resin in water. A most preferred solids content is 75%. Similarly a viscosity at 25°C of between 4000 to 7000 centi-poise and a pH at 25°C of 6.5 to 7.5 is preferred. The specific gravity is usually 1.1 to 1.3 grams per cu. cm.

Component B is a foaming agent and is typically a stable chemical compound. The most preferred foaming agent is a special blend of tri-chloro, tri-fluoroethanes though other agents are usable e.g. such as inert fluoro-carbons and tri-fluoromethanes. These are commercially available and sold under the Trade Marks FREON TF, PENTANE and FREON 12. Generally the properties of component B include a viscosity at 21°C of approximately 700 centi-poise and a density at 25°C of from 1.2 to 1.6 grams per cu. cm.

Component C is a reactive acid hardener (e.g. 100%). Typically this is an organic or inorgnaic acid such as phenol sulphonic acid, phosphoric acid and hydrochloric acid or mixtures thereof. Normally of a reddish colour, it is a clear hygroscopic liquid. Generally the properties of the component C include a viscosity at 25°C of around 400 centi-poise and a specific gravity is 1.3 to 1.5 grams per cu. cm.

Each of these component chemicals may be mixed in accordance with the following procedure. First the exact quantities of the components A, B & C need to be calculated. A is the major component and is the resin. B is the minor component and is a foaming or expanding agent. C is another minor component which is a catalyst or hardener.

The respective ratios of component A to component B and component A to component C may vary depending upon the desired density of the final foamed product. The following table is illustrative of these:

| Density $(Kg/m^3)$ | Comp. A: Comp. B | Comp. A: Comp. C |
|---|---|---|
| 5-15 | 5.2 : 1 | 6.5 : 1 |
| 25-35 | 4.5 : 1 | 6.5 : 1 |
| 55-65 | 9.3 : 1 | 7.5 : 1 |

Whilst it is believed that the phenolic foam of the present invention may be produced on a continuous basis it has, in initial tests, been found to be a more economical to produce large buns, i.e. batch production. A typical bun would be 2400 mm long x 1300 mm high x 1200 mm wide.

The following is an illustration of the process of producing a foam according to the present invention where a density is desired in the range 25 to 35 $Kg/m^3$. To this extent the ratio of components substantially accorded with those given in the Table above.

Component A is initially heated to a temperature of between 40 and 43°C. Once this initial temperature of the component A has been reached, component B is added.

Typically B component has a fairly high boiling point, relative to other foaming agents, and upon addition into the preheated component A, this will initiate a reaction between the A and B components. An expansion of the quantities by approximately 50% in the mixing vat results. As cooling occurs of A component, it reaches a temperature at which expansion halts until the A and B components are thoroughly mixed. Such mixing procedure needs to be carried out for a time sufficient to achieve the thorough mix. Typically, this is for between 3 to 5 minutes. This thorough mix ensures that when casting the product into a mould no air pockets or unmixed chemical components result.

When the A and B components are mixed satisfactorily in the mixing vat, typically when there are no visible lines of different colouration, the final step is to add C component. The addition of C component, a catalyst, causes the main foaming reaction to take place with the attendant expansion of the chemicals towards their final expanded and set form. Again, it is essential to ensure that C component is thoroughly mixed into the A and B components. At the point when the mixture is of one colour, there are no visible lines of different colouration in the mixing drum, the total mixture would then be cast into the mould of predetermined size where the final expansion will take place.

Further it is desirable to avoid ready dissipation of the heat that is generated by the chemical reaction within the mould. Therefore, it has been found useful to ensure that the predetermined mould has been thoroughly and adequately insulated on all its surfaces.

Typically when the total contents of the chemicals are cast into the mould, an insulated lid is then placed inside the mould on top of the liquid chemicals.

It has been found from this point on, the ambient temperature has a fair amount to do with the actual rise time. Typically at an ambient temperature of around 25°C it will take approximately 12 to 15 minutes for the foam to rise to the top of the mould and begin to set.

After foaming following the above method, the mould is left undisturbed for about 30 minutes. This appears to assist formation of a regular cellular structure. The mould will then be left for about a further 30 minutes to allow the additional curing to take place. Thereafter the mould may be disassembled to assist a final curing of 100% (e.g. 30 minutes). The cured bun can then be removed from the mould and can be stored.

This product had a density of 27 to 32 kg per cu. meter and a thermal conductivity of 0.034 Watts/$m^2$/$K^o$. It also exhibited a regular cell size structure of about 0.04 mm though the shape of each cell varied.  Similar tests have found the average cell sizes in other density foams as follows:-

50-60 Kg/$m^3$          0.028mm

15 Kg/$m^3$          0.06mm

9-12 Kg/$m^3$          0.058mm

Depending on the intended use of the foamed product it may be readily sliced with a bandsaw to the desired thickness and then laminated to any desired facing, e.g. cardboard, gypsum board or aluminium foil.

In a further aspect of the invention the same basic method of manufacture is pursued but with a different ratio of mix A, B and C (e.g. see Table above). It has been surprisingly found possible to produce a phenolic foam of a lower density around 5 to 15 kg. per cu. meter.

Such low density has major ramifications in reducing price of the product due to material savings whilst maintaining thermal insulation properties. However, such product exhibits an expanded cell size (e.g. 0.56 mm) which reduces its compressive strength. Nevertheless this lessening compressive strength is irrelevant to the application of such a product for home insulation purposes. Not only does the lower density mean the product is cheaper to manufacture, it also makes it easier to handle and install in such places as ceilings.

Typically, the ratio of Component A: Component B can range from 3:1 to 15:1 and preferably 3:1 to 7:1. Similarly the ratio of Component A: Component C can range from 5:1 to 10:1 and preferably 5:1 to 9.3.

If it is desirable to increase the compressive strength of this low density product, it is proposed to insert reinforcement into the foamed product.

Typically, reinforcements are honeycomb structures (e.g. paper), glass microspheres, fly ash and unexpanded polystyrene beads. These may be likewise incorporated in the higher density foams of the present invention. Usually the content of these reinforcements may range from 0% to 35% of the total product.

The honeycomb structure can take on any desired shape and will be discussed in more detail later. The glass microspheres are usually hollow to reduce the weight imput. These have been found to be particularly useful in the low density foams of the present invention as they become well disbursed in the foaming mixture. However, when forming higher density foams according to the present invention, care should be taken to avoid the tendency of the microspheres to float to the top of the foaming mixtures. Fly ash is convenient where the weight of the foam is not important as it has a high weight. As mentioned, unexpanded polystyrene beads may be used, however, due to their poor fire resistance rating they should only be used where high fire rating is not critical.

Conveniently these reinforcements may be inserted into the mould immediately after the chemicals have been cast into the base of the mould. In the case of a honeycomb construction e.g. paper, a core of paper may be made in blocks of 8' long or 2400 mm long x 1200 wide x 1300 high. A paper weight of between 130 and 400 $gm/m^2$ has been found to be acceptable, more preferably 200 to 300 $gm/m^2$ and most preferred about 260 $gm/m^2$. The basic procedure is the same except that a weighted cover is placed on top of the honeycomb core and the foam is allowed to rise and set between the core structure. It has been found that once the foam has set with this paper honeycomb encapsulated in it, the low density foam may be sliced up and laminated to the various types of external facing and exhibits tremendously improved compressive strength.

The advantages of this particular product are quite apparent. The cost for raw materials may be reduced by up to 50%. Similarly as such a paper honeycomb can be collapsed and is relatively light, it lends itself to easy and economical transport where an operator is to be supplied with foaming components and reinforcement. When the foam is formed, the honeycomb core becomes impregnated with phenolic chemicals which in turn will help retard the spread of flame or ignition of the paper. By cutting the bun across the grain of the honeycomb core and then laminating the external finishes to the composite honeycomb insulboard foam, it has tremendous compressive strength. The fire retardant and resistance properties are maintained as are the thermal properties and all of the other basic properties of the foam according to the first aspect of the invention.

Whilst the modified foam has been described in conjunction with reinforcement, it is not so limited. In many applications high compressive strength is not required. Typically when considering soft home insulation materials it has been common to use a fibre glass material or rock wool. Whilst these products have no structural strength and are merely insulating materials, they do have disadvantages. Namely, fibre glass is very unpleasant to handle and after handling it one ends up with glass particles being absorbed through the pores of the skin into the blood stream. This of course is highly undesirable. It is believed the main reason for the use of the fibre glass insulation is its low cost. However, the modified foam according to the present invention at a density of around 7 to 10 kg. per cu. meter is a lot more pleasant to handle as it has no dangerous particles which could inflict sickness or ill health to the human being. In addition, the modified phenolic foam in its low density form is an economical and viable alternative to the more commonly used fibre glass insulating material. This foam may be pre-cut to specific size to fit between ceiling joists and stud frame of existing constructions.

Thus the invention provides a new foam composition and method of manufacture which has enhanced utility in the insulation industry.

CLAIMS

1.      A method of producing phenolic foam composition
by reacting
        (A)  an aqueous solution of a reactive phenolic
resin having 65-85% wt. solid solution
        (B)  a foaming agent and
        (C)  a reactive acid hardener
wherein the ratio of component (A) to component (B) is
from 4.5:1 to 9.3:1 and the ratio of component (A) to
component (C) is from 6.5:1 to 7.5:1.

2.      A method of producing phenolic foam composition
by reacting
        (A)  a 65% wt. to 85% wt. of solid solution of a
reactive phenol formaldehyde resin in water having a
viscosity at 25% of between 4000 to 7000 centi-poise, a pH
of 6.5 to 7.5 and a specific gravity of 1.1 to 1.3 gm. per
cubic cm, said solution optionally including a surfactant;
        (B)  a foaming agent having a viscosity at $21^{\circ}$C
centi-poise of about 700 centi-poise and a density at $25^{\circ}$C
of from 1.2 to 1.6 gram per cubic cm; and
        (C)  a reactive acid hardener having a viscosity
at $25^{\circ}$C of about 400 centi-poise and a specific gravity
of 1.3 to 1.5 gm per cubic cm.

3.      The method of claim 2 wherein the ratio of component (A) to component (B) is from 4.5 :1 to 9.3:1 and the
ratio of component (A) to component (C) is from 6.5:1 to
7.5:1.

4.      A method according to claims 1 or 2 wherein the
ratio of component (A) to component (B) is about 5.2:1 and
the ratio of component (A) to component (C) is       about
6.5 to 1.

5.      The method according to either claims 1 or 2
wherein

(1)     component (A) is heated to a temperature between 40 and 43$^{\circ}$C;

(2)     component (B) is added to the heated component (A) and thoroughly mixed for up to 5 minutes;

(3)     component (C) is thereafter added to the mixture and thoroughly mixed, whereupon the mixture foams.

6.     A phenolic foam produced by the method of any one of claims 1 to 5 having a density of from 5 to 35 kgm/m$^3$.

7.     A phenolic foam according to claim 6 having a density of from 5 to 15 kgm/m$^3$.

8.     A method of producing a phenolic foam composition having a density of about 5 to about 15 kg per m$^3$ by reacting

(A)   an aqueous solution of reactive phenolic resin having 65-85% wt. solid solution

(B)   a forming agent and

(C)   a reactive acid hardener wherein the ratio of component (A) to component (B) is from 3:1 to 15:1 and the ratio of component (A) to component (C) is from 5:1 to 10:1.

9.     A method according to claim 8 wherein the ratio of component (A) to component (B) is 3:1 to 7:1 and the ratio of component (A) to component (C) is from 5:1 to 9.3.

10.     A foamed article comprising a honeycomb of paper with phenolic foam, interspersed therein, the phenolic foam being formed therein and having a density of from 5 to 35 kgm/m$^3$.

11.        A foamed article according to claim 8 wherein the phenolic foam is formed by the method of any one of claims 1 to 5, 8 and 9.

WMcM:HW